(19) Europäisches Patentamt
European Patent Office
Office européen des brevets

(11) Publication number : **0 340 180 B1**

(12) **EUROPEAN PATENT SPECIFICATION**

(45) Date of publication of patent specification :
**13.11.91 Bulletin 91/46**

(51) Int. Cl.⁵ : **B60J 5/10,** B62D 29/04

(21) Application number : **89830161.9**

(22) Date of filing : **11.04.89**

(54) A rear hatch for motor cars.

(30) Priority : **20.04.88 IT 5307788 U**

(43) Date of publication of application :
**02.11.89 Bulletin 89/44**

(45) Publication of the grant of the patent :
**13.11.91 Bulletin 91/46**

(84) Designated Contracting States :
**DE ES FR GB SE**

(56) References cited :
**EP-A- 0 039 071**
**EP-A- 0 044 649**
**EP-A- 0 046 360**
**EP-A- 0 256 399**
**EP-A- 0 257 608**
**DE-A- 1 755 512**

(56) References cited :
**FR-A- 2 360 459**
**FR-A- 2 447 845**
**GB-A- 2 078 628**
**PATENT ABSTRACTS OF JAPAN, vol. 10, no.
171 (M-489)[2227], 17th June 1986, page 123 M
489; & JP-A-61 21 840 (NISSAN JIDOSHA K.K.)
30-01-1986**

(73) Proprietor : **FIAT AUTO S.p.A.**
**Corso Giovanni Agnelli 200**
**I-10135 Torino (IT)**

(72) Inventor : **Scolari, Paolo**
**Corso Giovanni Agnelli, 200**
**I-10135 Torino (IT)**

(74) Representative : **Buzzi, Franco et al**
**c/o Jacobacci-Casetta & Perani S.p.A. Via
Alfieri, 17**
**I-10121 Torino (IT)**

Jouve, 18, rue Saint-Denis, 75001 PARIS

## Description

The present invention relates to a rear hatch for motor cars, comprising an outer panel and an inner frame fixed to the outer panel.

In hatches of this type, the outer panel constitutes the element which completes the motor car bodywork and therefore has principally an aesthetic function, whilst the inner frame constitutes the load-bearing structure of the hatch to which the respective functional elements (hinges for articulation of the door, attachments for the gas springs, locks) are fixed.

According to known techniques the outer panel and the inner frame are both of the same material : metal or plastics. In the first case, there is the problem that the production of the outer panel involves difficulties in the shaping of the sheet metal, resulting in stylistic and aesthetic limitations.

In the second case, there are problems connected with the fragility of structures of plastics material, with the fact that they are unstable and deform with heat, and with the difficulty of the fitting of the metal functional members to the hatch.

The object of the present invention is to avoid the above problems and to produce a rear hatch for motor cars of the type defined at the beginning, which enables the aesthetic and functional requirements to be reconciled effectively.

According to the invention, this object is achieved by means of a hatch characterised in that the outer panel is of plastics material and the inner frame is of metal.

The metal inner frame and the outer panel, normally of reinforced thermosetting plastics, are conveniently fixed together by gluing.

By virtue of this conformation, the door according to the invention can easily be adapted to various stylistic requirements, by virtue of the ease with which the plastics outer panel can be moulded. At the same time, it ensures the necessary structural strength and stability by virtue of the presence of the metal inner frame whose connection to the functional members of the door can be achieved without particular difficulty.

Further characteristics and advantages of the invention will become clear in the course of the detailed description which follows with reference to the appended drawings, provided by way of non-limiting example, in which :

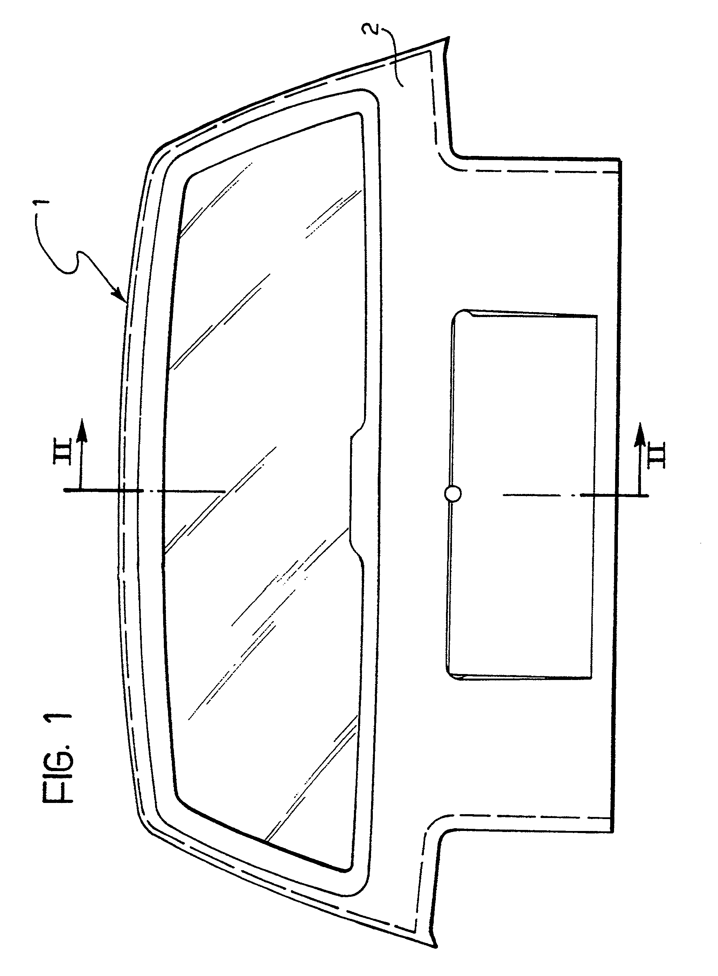

Figure 1 is a schematic elevational view of a rear hatch for motor cars according to the invention,

Figure 2 is a section taken on the line II-II of Figure 1, on an enlarged scale, and

Figure 3 shows a detail of Figure 2 on an enlarged scale.

With reference to the drawings, a rear hatch for motor cars is generally indicated 1 and is constituted by an outer panel 2 and an inner frame 3. According to the invention, the outer panel 2 is of moulded plastics material, normally thermosetting resin reinforced with glass or carbon fibres, and the inner frame 3 is of metal.

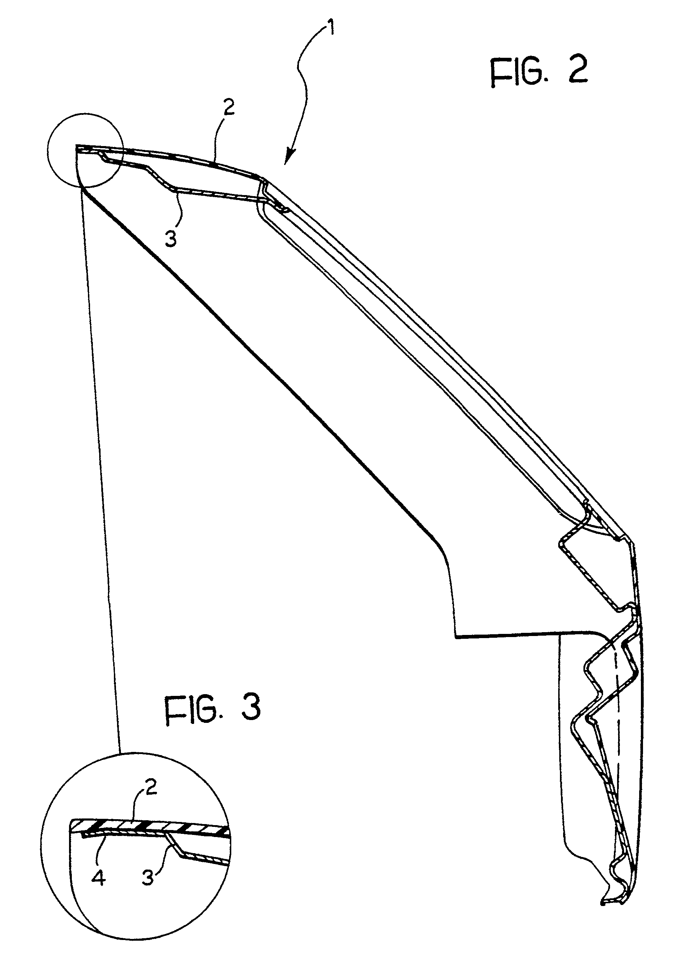

The outer panel 2 and the inner frame 3 are usually joined together by gluing with suitable glues as shown at 4 in Figure 3.

The metal frame 3, which constitutes the load-bearing element of the door 1, is arranged for the fitting in a conventional manner of the functional elements (not illustrated) of the door 1, such as the attachments for the hinges for its articulation to the bodywork of the car, the attachments for the gas springs, the lock, etc.

## Claims

1. A rear hatch (1) for motor cars, comprising an outer panel (2) and an inner frame (3) fixed to the outer panel (2), characterised in that the outer panel (2) is of plastics material and the inner frame (3) is of metal.

2. A hatch according to Claim 1, characterised in that the outer panel (2) of plastics material and the metal inner frame (3) are joined together by gluing (4).

## Patentansprüche

1. Kraftfahrzeug-Heckklappe (1) mit einer äußeren Tafel (2) und einem inneren Rahmen (3), der an der äußeren Tafel (2) befestigt ist, dadurch gekennzeichnet, daß die äußere Tafel (2) aus Plastikmaterial besteht und der innere Rahmen (3) aus Metall.

2. Heckklappe nach Anspruch 1, dadurch gekennzeichnet, daß die äußere Tafel (2) aus Plastikmaterial und der innere Rahmen (3) aus Metall durch Kleben (4) miteinander verbunden sind.

## Revendications

1. Hayon arrière (1) pour véhicules automobiles, comprenant un panneau extérieur (2) et un châssis intérieur (3) fixé au panneau extérieur (2), caractérisé en ce que le panneau extérieur (2) est fait de matière plastique et que le châssis intérieur (3) est métallique.

2. Hayon selon la revendication 1, caractérisé en ce que le panneau extérieur (2) en matière plastique et le châssis intérieur métallique (3) sont assemblés l'un à l'autre par collage (4).

FIG. 1

FIG. 2

FIG. 3